# EUROPÄISCHE PATENTSCHRIFT

(11) **EP 2 679 194 B1**
(45) Veröffentlichungstag und Bekanntmachung des Hinweises auf die Patenterteilung: **30.08.2023**
(21) Anmeldenummer: 12173500.5
(22) Anmeldetag: 26.06.2012
(51) Int. Cl.: A61C 1/00, A61C 1/08, A61C 1/12

(54) **MEDIZINISCHES, INSBESONDERE DENTALES, GRIFFSTÜCK**
MEDICAL, IN PARTICULAR DENTAL HANDLE
PIÈCE DE PRÉHENSION MÉDICALE, EN PARTICULIER DENTAIRE

(43) Veröffentlichungstag der Anmeldung: 01.01.2014
(73) Patentinhaber: W & H Dentalwerk Bürmoos GmbH, 5111 Bürmoos (AT)
(72) Erfinder: Heinrich, Christoph, 5110 Oberndorf (AT); Schmiedlechner, Karl, 5121 Ostermiething (AT); Wagner, Hannes, 5023 Salzburg (AT)

(56) Entgegenhaltungen:
- EP-A1- 2 420 198
- DE-A1- 19 702 370
- US-A1- 2005 271 997
- US-A1- 2006 183 071

## Beschreibung

Die vorliegende Erfindung bezieht sich auf ein medizinisches, insbesondere dentales, Griffstück zum Antrieb eines medizinischen Instruments nach Anspruch 1.

Derartige medizinische, insbesondere dentale, Griffstücke dienen zum Antrieb medizinischer Instrumente. Hierzu weisen die Griffstücke eine Antriebsvorrichtung oder Versorgungsleitung für die Antriebsvorrichtung auf. Die Griffstücke selbst sind hierbei vorzugsweise als medizinische Hand- oder Winkelstücke mit einer ersten Anschlussvorrichtung zum Anschluss der medizinischen, insbesondere dentalen, Instrumente, welche bevorzugt zur Bearbeitung von hartem oder weichem Gewebe oder zum Einbringen von Implantaten dienen, ausgebildet. Die Griffstücke können, insbesondere gerade, gebogene oder pistolenförmige, als auch als Teile von Hand- oder Winkelstücken ausgebildet sein. Um die mit den Griffstücken verbundenen medizinischen Instrumente anzutreiben, sind die Griffstücke, insbesondere die darin angeordneten Antriebsvorrichtungen oder Versorgungsleitungen, über eine zweite Anschlussvorrichtung bevorzugt mittels Versorgungsschläuchen mit medizinischen, insbesondere dentalen, Einheiten, Motore oder Medienquellen verbindbar. Die dentalen Einheiten stellen die für die medizinischen Instrumente und Griffstücke jeweils benötigten Arbeitsmedien, wie zum Beispiel Sprayluft und/ oder Spraywasser zur Kühlung und/ oder elektrische Energie zur Versorgung von in den Griffstücken angeordneten elektrischen Bauteilen, wie z.B. von einer oder mehreren Leuchtdioden zur Beleuchtung der Behandlungsstellen, Sensoren oder von elektrischen Speichern zur Speicherung von bevorzugt instrumentenbezogenen Daten, zur Verfügung. Zur Übertragung der Daten und/ oder Energie weisen die Griffstücke bevorzugt im Bereich der Anschlussvorrichtungen elektrische Kontakte auf.

Im Stand der Technik ist es bekannt, dass die Versorgung der elektrischen Bauteile, insbesondere der zumindest einen Leuchtdiode, mit elektrischer Energie in den Griffstücken mittels elektrischer Leitungen erfolgt, die sich von der zumindest einen Leuchtdiode durch die Griffstücke bis zu den Anschlussvorrichtungen zum Verbinden der Griffstücke mit den Versorgungsschläuchen erstrecken. Des Weiteren ist es bekannt neben der zumindest einen Leuchtdiode weitere elektrische Bauteile, wie z.B. eine Versorgungselektronik, mittels elektrischer Leitungen mit Energie zu versorgen. Im Bereich der Anschlussvorrichtungen für die Versorgungsschläuche enden die elektrischen Leitungen in elektrischen Kontakten, die mit Kontakten an den Versorgungsschläuchen lösbar verbindbar sind. Die den elektrischen Bauteilen zugewandten Enden der elektrischen Leitungen sind mit Kontakten der elektrischen Bauteile, insbesondere der zumindest einen Leuchtdiode und/ oder Versorgungselektronik, verbindbar.

Hierzu ist es im Stand der Technik üblich elektrische Kabel als elektrische Leitungen zu verwenden, um elektrische Energie und/ oder Daten zwischen den elektrischen Bauteilen und den elektrischen Kontakten zu übertragen. Die elektrischen Kabel weisen jeweils einen elektrischen Leiter auf, welche von einem Isolierstoff umgeben ist. Um mehrere elektrische Bauteile mit Energie und/ oder Daten zu versorgen ist des Weiteren bekannt Flachbandkabel in den Griffstücken anzuordnen. Diese weisen mehrere elektrische Leiter auf, welche parallel zueinander angeordnet und jeweils von einem Isoliermaterial umgeben sind.

Um schließlich die elektrischen Bauteile und die elektrischen Leitungen, insbesondere die Verbindungsstellen beider Komponenten in den Griffstücken vor Schmutz und Feuchtigkeit zu schützen, sind zumindest die Verbindungsstellen zwischen den elektrischen Leitungen und der elektrischen Bauteile zusätzlich mit einem weiteren Isoliermaterial umgeben.

Ein derartiges Griffstück ist insbesondere aus der EP 2 420 198 A1 bekannt.

Das bekannte Handwerkzeug umfasst einen Werkzeugkörper und einen damit verbundenen Werkzeugkopf mit einer Beleuchtungsvorrichtung. Die Beleuchtungsvorrichtung ist hierbei bevorzugt durch mehrere Leuchtdioden gebildet, welche auf einem gemeinsamen festen oder flexiblen Träger angeordnet sind. Auch die US 2005/0271997 A1 offenbart eine elektrische, insbesondere kabellose, Zahnbürste mit einem Handstück und einem daran anschließbaren Bürstenkopf, wobei eine Beleuchtungsvorrichtung auf einem flexiblen Träger angeordnet ist, um diese mit elektrischer Energie zu versorgen. Der Träger erstreckt sich hierbei von einer in dem Handstück aufgenommenen Batterie bis zu der Beleuchtungsvorrichtung. Die Energieübertragung erfolgt hierbei innerhalb des Handstücks.

Um die mehreren Leuchtdioden aus der EP 2 420 198 A1 mit elektrischer Energie zu versorgen, sind in dem Werkzeugkörper mehrere elektrische Leitungen vorgesehen, welche mit Anschlüssen an dem festen oder flexiblen Träger verbindbar sind. Die mehreren elektrischen Leitungen werden hierbei durch das Handstück bis zu einem Verbindungsblock geführt. An den Verbindungsblock sind wiederum externe Medienleitungen anschließbar, um das Handstück, insbesondere die mehreren Leuchtdioden, mit elektrischer Energie zu versorgen.

Die Patentanmeldung US 2006/0183071 A1 offenbart eine phototherapeutische Zahnbürste, die gemäß einem Ausführungsbeispiel eine flexible, gebogene Leiterplatte aufweist, auf der Lichtquellen angeordnet sind.

Als nachteilig dieser Ausgestaltung der Energie und/ oder Datenübertragung in den medizinischen, insbesondere dentalen, Griffstücken mittels elektrischer Kabel erweist sich der Platzbedarf der elektrischen Leitungen in den Griffstücken. Durch die Anordnung eines oder mehrerer elektrischer Bauteile in den Griffstücken sind eine Vielzahl elektrischer Kabel zur Energie- und/ oder Datenübertragung erforderlich. Diese müssen zusätzlich zu den Antriebsvorrichtungen oder Versorgungsleitungen für die Antriebsvorrichtungen und den elektrischen Bauteilen und Kontakten in den Griffstücken aufgenommen werden. Dies wiederum steht einer anwenderfreundlichen Ausgestaltung der Griffstücke, insbesondere einer möglichst kleinen Ausformung der Griffstücke, um die Handhabung für die Anwender zu verbessern, entgegen.

Einen weiteren Nachteil der im Stand der Technik bekannten Ausführungsform stellt die Verbindung der elektrischen Bauteile und der elektrischen Kontakte mit den elektrischen Kabeln dar. Bei der Verwendung von elektrischen Kabeln zur Energie- und/ oder Datenübertragung muss jede dieser Verbindungen manuell erstellt werden. Hierbei ist es üblich, dass die elektrischen Kabel mittels eines Lötverfahrens mit den elektrischen Kontakten, insbesondere der elektrischen Bauteile, verbunden werden, wobei das Lot als stoffschlüssige Verbindung dient. Da der Lötvorgang manuell erfolgt, ist dieser äußerst zweitaufwendig und somit die Verbindung der elektrischen Bauteile mit den elektrischen Kabeln mit hohen Kosten verbunden.

Des Weiteren ist bei der Verwendung elektrischer Kabel als elektrische Leiter eine Isolierung der Verbindungsstellen, insbesondere der nicht isolierten Enden der elektrischen Kabel, welche mit den elektrischen Kontakten der elektrischen Bauteile verbindbar sind, notwendig, um diese vor einer gegenseitigen Berührung, Schmutz und Feuchtigkeit zu schützen. Dieser zusätzliche Bearbeitungsschritt ist ebenfalls mit Kosten verbunden.

Der vorliegenden Erfindung liegt daher die Aufgabe zugrunde ein medizinisches, insbesondere dentales, Griffstück zu schaffen, welches bei einfacher Herstellung die Nachteile des Stand der Technik vermeidet und es insbesondere ermöglicht, die elektrischen Bauteile und Kontakte des Griffstücks in einfacher und platzsparender Weise in elektrischer Verbindung miteinander in dem Griffstück anzuordnen. Die vorliegende Erfindung bezieht sich auf ein medizinisches, insbesondere dentales Griffstück zum Antrieb eines medizinisches Instruments gemäß Anspruch 1. Ausführungsformen der Erfindung sind in den abhängigen Ansprüchen definiert.

Gemäß einem Ausführungsbeispiel eines medizinischen, insbesondere dentalen, Griffstücks zum Antrieb eines medizinischen Instruments weist dieses ein Gehäuse mit einer darin aufgenommenen Antriebsvorrichtung und/ oder Versorgungsleitung für eine Antriebsvorrichtung, eine erste Anschlussvorrichtung zum, insbesondere lösbaren, Anschließen eines medizinischen, insbesondere dentalen, Instruments sowie eine zweite Anschlussvorrichtung zum, insbesondere lösbaren, Verbinden des Griffstücks mit einer Medienquelle und/ oder einer Antriebseinheit, zumindest ein, vorzugsweise eine Leuchtdiode umfassendes, elektrisches Bauteil, zumindest einen elektrischen Kontakt und eine elektrische Verbindungsvorrichtung auf, die das zumindest eine elektrische Bauteil und den zumindest einen elektrischen Kontakt elektrisch miteinander verbindet, wobei die elektrische Verbindungsvorrichtung eine im Inneren des Griffstücks angeordnete flexible Leiterplatte umfasst.

Die flexible Leiterplatte ist durch einen isolierenden Basiskörper, der einseitig oder beidseitig mit elektrisch leitenden Leiterbahnen, vorzugsweise aus Kupfer, Aluminium, Nickel oder einer Legierung, beschichtet ist, gebildet. Der Basiskörper selbst ist hierbei durch ein flexibles Trägermaterial, insbesondere eine Trägerfolie aus Kunststoff, gefertigt. Auf der Trägerschicht sind neben den bevorzugt vergoldeten Leiterbahnen Anschlüsse, insbesondere Lötflächen, zur Aufnahme und Kontaktierung der elektrischen Bauteile angeordnet, welche in elektrischer Verbindung mit Leiterbahnen stehen. Die Leiterbahnen sind vorzugsweise durch eine Deck- bzw. Isolierschicht vor Schmutz und Feuchtigkeit geschützt. Diese Schicht besteht vorzugsweise aus einem Lack, einer Folie oder einer Spritzgusskomponente.

Des Weiteren kann die flexible Leiterplatte unterschiedlich flexible Bereiche aufweisen.

Dies werden bevorzugt durch unterschiedlich starke Trägerschichten und/ oder Deck- bzw. Isolierschichten gebildet. Es ist auch denkbar, dass die Trägerschicht und/ oder die Deck- bzw. Isolierschicht aus unterschiedlichen Materialien mit unterschiedlichen Biegeeigenschaften besteht.

Neben der flexiblen Leiterplatte umfasst die Verbindungsvorrichtung vorzugsweise des Weiteren eine starre Leiterplatte mit einem starren Trägermaterial, wobei die flexible und/ oder starre Leiterplatte die Anschlüsse zur Befestigung des zumindest einen elektrischen Bauteils und/ oder des zumindest einen elektrischen Kontakts aufweist. Beide Leiterplatten der Verbindungsvorrichtung sind insbesondere elektrisch und mechanisch miteinander verbunden, um die Daten und/ oder Energie zwischen den elektrischen Bauteilen zu übertragen.

Bevorzugt sind Abschnitte der flexiblen und/ oder starren Leiterplatte in dem Griffstück in unterschiedlichen Winkeln, vorzugsweise zwischen 0 und 90 Grad, zur Längsachse des Griffstücks angeordnet, so dass diese platzsparend in dem Griffstück zwischen dem Gehäuse und der Antriebsvorrichtung aufgenommen werden kann. Hierzu weist die flexible und/ oder starre Leiterplatte eine Ausnehmung auf, durch welche sich die Antriebsvorrichtung, die Versorgungsleitung und/ oder zumindest eine der Anschlussvorrichtungen erstreckt.

Des Weiteren ist die elektrische Verbindungsvorrichtung vorzugsweise lösbar mit dem Griffstück verbunden, so dass diese austauschbar ist. Hierzu weist das Griffstück und/ oder die flexible und/ oder starre Leiterplatte Haltemittel, insbesondere eine Klemmverbindung, zur lösbaren Verbindung der elektrischen Verbindungsvorrichtung mit dem Griffstück auf.

Gemäß einem ersten Ausführungsbeispiel des Griffstücks für ein medizinisches, insbesondere dentales Hand- oder Winkelstück mit einer bevorzugt drehbar gelagerte Werkzeugaufnahme für ein Behandlungswerkzeug und einer Verbindungsvorrichtung gemäß einer der oben angeführten Ausführungsformen, weist die flexible und/ oder starre Leiterplatte zwei voneinander elektrisch isolierte Abschnitte auf, wobei auf jedem der beiden Abschnitte je ein elektrischer Kontakt vorgesehen ist, um so die elektrischen Kontakte elektrisch isoliert voneinander auf der flexiblen oder starren Leiterplatte anzuordnen.

Gemäß einem zweiten Ausführungsbeispiel des Griffstücks, insbesondere für eine medizinische, insbesondere dentale Kupplungsvorrichtung, zur Verbindung eines medizinischen Hand- oder Winkelstücks mit einem Versorgungsschlauch, ist die erste und/ oder zweite Anschlussvorrichtung als Kupplungsvorsprung mit einer Mantelfläche, einer Stirnfläche sowie einer Kupplungsbasis ausgebildet.

Der zur Aufnahme des elektrischen Bauteils oder elektrischen Kontakts ausgebildete Abschnitt der elektrischen Verbindungsvorrichtung, insbesondere der starren und/ oder flexiblen Leiterplatte, ist bevorzugt in dem Kupplungsvorsprung und/ oder vor oder hinter der Kupplungsbasis angeordnet, wobei die zumindest eine mit elektrisch leitenden Leiterbahnen beschichtete Seite der flexiblen und/ oder starren Leiterplatte der Mantelfläche oder Stirnfläche des Kupplungsvorsprungs oder der vorzugsweise ringförmigen Kupplungsbasis zugewandt ist.

Bevorzugt weist das zumindest eine elektrische Bauteil der medizinischen, insbesondere dentalen, Kupplungsvorrichtung einen Generator zur Wandlung mechanischer in elektrischer Energie auf.

Gemäß einem dritten Ausführungsbeispiel des Griffstücks, insbesondere für eine medizinische, insbesondere dentale, Antriebseinheit, welche in dem Griffstück angeordnet ist und vorzugsweise einen Elektromotor oder Luftmotor zum Antrieb eines mit der Antriebseinheit verbundenen medizinischen, insbesondere dentalen, Hand- oder Winkelstücks umfasst, ist die elektrische Verbindungsvorrichtung des Griffstücks, insbesondere die flexible und/ oder starre Leiterplatte, und das elektrische Bauteil in dem Gehäuse zumindest teilweise in einem Hüllmaterial, insbesondere in einem Vergussmassekörper oder einer Lackschicht, eingebettet.

Des Weiteren ist die erste oder zweite Anschlussvorrichtung des Griffstücks der Antriebsvorrichtung vorzugsweise als Kupplungsausnehmung mit einer die Ausnehmung umgebenden Mantelfläche und einer Stirnfläche ausgebildet, wobei der zur Aufnahme des elektrischen Bauteils oder elektrischen Kontakts ausgebildete Abschnitt der elektrischen Verbindungsvorrichtung, insbesondere der flexiblen und/ oder starren Leiterplatte, in dem Gehäuse des Griffstücks zwischen der Mantelfläche und dem Gehäuse und/ oder hinter der Stirnfläche der Ausnehmung angeordnet ist. Die zumindest eine mit elektrisch leitenden Leiterbahnen beschichtete Seite der flexiblen und/ oder starren Leiterplatte ist bevorzugt der Mantelfläche oder Stirnfläche der Kupplungsausnehmung zugewandt.

Das vorliegende Griffstück zeichnet sich durch folgende Vorteile aus.

Einen Vorteil der Erfindung bildet die Möglichkeit der anwenderfreundlichen Ausgestaltung der Griffstücke. Durch die Ausbildung des erfindungsgemäßen Griffstücks mit einer elektrischen Verbindungsvorrichtung mit einer flexiblen Leiterplatte können die elektrischen Bauteile und Kontakte platzsparend in dem Griffstück, insbesondere zwischen der Antriebsvorrichtung oder der Versorgungsleitung für die Antriebsvorrichtung und dem Gehäuse des Griffstücks, in elektrischer Verbindung miteinander angeordnet werden. Dies ermöglicht eine Optimierung der Baugröße des Griffstücks, insbesondere dessen Gehäuses, wodurch die Handhabung für den Anwender verbessert wird.

Des Weiteren ermöglicht das erfindungsgemäße Griffstück, insbesondere die elektrische Verbindungsvorrichtung mit der flexiblen Leiterplatte, eine vereinfachte elektrische Verbindung der elektrischen Bauteile und Kontakte in dem Griffstück. Die elektrischen Bauteile können automatisch, insbesondere mechanisch und elektrisch, vorzugsweise mittels automatischer Bestückungsvorrichtungen, auf der Leiterplatte montiert werden.

Ein weiterer Vorteil bei der Verwendung einer flexiblen Leiterplatte zur elektrischen Verbindung der elektrischen Bauteile und Kontakte besteht darin, dass keine zusätzliche Isolierung der Verbindungsstellen zwischen den elektrischen Bauteilen und der elektrischen Leitungen, insbesondere der elektrischen Kabel, notwendig ist. Die elektrischen Bauteile und Kontakte können direkt auf die Anschlüsse, insbesondere auf die Lötflächen, der Leiterplatte angeordnet, insbesondere gelötet, werden, welche in elektrischer Verbindung mit den isolierten Leiterbahnen der flexiblen Platine stehen. Hierdurch weist die Verbindungsstelle, keine freien Stellen auf, welche vor Schmutz und Feuchtigkeit geschützt werden müssen.

Nachfolgend wird die Erfindung anhand mehrerer Ausführungsbeispiele und in Verbindung mit den beigefügten Zeichnungen erläutert.

Dabei zeigt:
Figur 1A in Schnittdarstellung ein erstes Ausführungsbeispiel des Griffstücks für ein vorzugsweise elektrisch betriebenes medizinisches, insbesondere dentales,
Winkelstück,
Figur 1B die elektrische Verbindungsvorrichtung aus Figur 1A gemäß dem ersten Ausführungsbeispiel des Griffstücks,
Figur 1C ein medizinisches, insbesondere dentales, Winkelstück mit einem Griffstück gemäß Figur 1A in Schnittdarstellung;
Figur 2A in Schnittdarstellung ein zweites Ausführungsbeispiel des Griffstücks für ein luftbetriebenes medizinisches, insbesondere dentales, Winkelstück,
Figur 2B die elektrische Verbindungsvorrichtung aus Figur 2A gemäß dem zweiten Ausführungsbeispiel des Griffstücks,
Figur 3A in Schnittdarstellung eine medizinische, insbesondere dentale, Kupplungsvorrichtung mit einem dritten Ausführungsbeispiel des Griffstücks,
Figur 3B die elektrische Verbindungsvorrichtung aus Figur 3A gemäß dem dritten Ausführungsbeispiel des Griffstücks;
Figur 4A in Schnittdarstellung eine medizinische, insbesondere dentale, Antriebseinheit mit einem vierten Ausführungsbeispiel des Griffstücks,
Figur 4B die elektrische Verbindungsvorrichtung aus Figur 4A gemäß dem vierten Ausführungsbeispiel des Griffstücks,
Figur 4C die elektrische Verbindungsvorrichtung aus Figur 4B, wobei die Verbindungsvorrichtung zumindest teilweise in einem Hüllmaterial eingebettet ist,
Figur 4D in perspektivischer Außenansicht die medizinische Antriebseinheit aus Figur 4A ohne Gehäuse und aus Sicht der ersten Anschlussvorrichtung und
Figur 4E ebenfalls in perspektivischer Außenansicht die medizinische Antriebseinheit aus Figur 4A ohne Gehäuse aber aus Sicht der zweiten Anschlussvorrichtung;

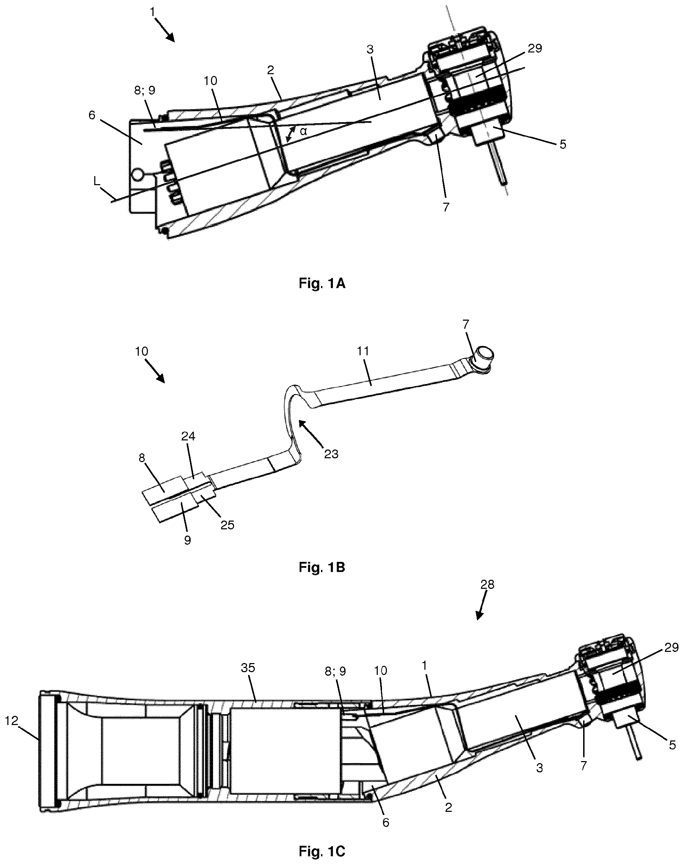

Figur 1A zeigt in Schnittdarstellung ein erstes Ausführungsbeispiel des Griffstücks 1 für ein vorzugsweise elektrisch betriebenes medizinisches, insbesondere dentales, Winkelstück. Zum insbesondere lösbaren, Anschließen eines medizinischen, insbesondere dentalen, Instruments an die in dem Griffstück 1 angeordnete Antriebsvorrichtung 3 ist eine erste Anschlussvorrichtung 5 bevorzugt als drehbar gelagerte Werkzeugaufnahme 29 ausgebildet. Die Antriebsvorrichtung 29 selbst weist vorzugsweise eine Antriebswelle, welche mittels zumindest eines Lagers drehbar in dem Gehäuse 2 des Griffstücks 1 gelagert ist, auf. Das Gehäuse 2 des Griffstücks 1 wiederum ist hierzu vorzugsweise hülsenförmig ausgebildet. Zum, insbesondere lösbaren, Verbinden des Griffstücks 1 mit einer Medienquelle und/ oder einer Antriebseinheit weist das Griffstück 1 eine zweite Anschlussvorrichtung 6 auf. Diese ist bevorzugt gewinkelt zur ersten Anschlussvorrichtung 5 angeordnet. In dem Griffstück 1, insbesondere im Bereich der ersten Anschlussvorrichtung 5, ist neben der Antriebsvorrichtung 3 vorzugsweise eine Leuchtdiode umfassendes elektrisches Bauteil 7 angeordnet. Zur Versorgung des Bauteils 7 mit elektrischer Energie weist das Griffstück zumindest einen elektrischen Kontakt 8, 9 auf, welcher bevorzugt im Bereich der zweiten Anschlussvorrichtung 6 angeordnet ist, die wiederum mit einer Medienquelle und/ oder einer Antriebseinheit verbindbar ist. Um schließlich das elektrische Bauteil 7 und den zumindest einen elektrischen Kontakt elektrisch miteinander zu verbinden, weist das Griffstück 1 eine elektrische Verbindungsvorrichtung 10 auf. Diese erstreckt sich vorzugsweise von der ersten Anschlussvorrichtung 5 in Richtung der zweiten Anschlussvorrichtung 6, um Daten und/ oder Energie zu übertragen. Um die Verbindungsvorrichtung 10 in dem Griffstück 1, insbesondere zwischen dem Gehäuse 2 und der Antriebsvorrichtung 3 platzsparend aufzunehmen, weist diese Abschnitte auf, die in unterschiedlichen Winkeln α, vorzugsweise zwischen 0 und 90 Grad, zur Längsachse L des Griffstücks 1 angeordnet sind.

Figur 1B zeigt die im Inneren des Griffstücks 1 angeordnete elektrische Verbindungsvorrichtung 10 aus Figur 1A. Die Verbindungsvorrichtung 10 umfasst eine flexible Leiterplatte 11. Die flexible Leiterplatte 11 weist in diesem Ausführungsbeispiel zumindest zwei streifenförmige und einen ringsegmentförmigen Abschnitt auf. Die Abschnitte sind bevorzugt gewinkelt zueinander angeordnet. Der zumindest eine ringsegmentförmige Abschnitt umgibt eine Ausnehmung 23, welche zur Anordnung der flexiblen Leiterplatte 11 in dem Griffstück 1 zwischen der Antriebsvorrichtung 3, insbesondere der Wellenanordnung, und dem Gehäuse 2 dient. Neben den streifenförmigen Abschnitten und dem ringsegmentförmigen Abschnitt weist die flexible Leiterplatte 11 des Weiteren zwei voneinander elektrisch isolierte Abschnitte 24 und 25 auf, wobei jeder der beiden Abschnitte 24 und 25 mit je einem elektrischen Kontakt 8 und 9 bestückt ist. Durch die Bestückung der Leiterplatte 11 erfolgt eine elektrische Verbindung der Kontakte 8, 9 mit den auf der Leiterplatte 11 angeordneten Leiterbahnen, wodurch Daten und/ oder Energie auf die Leiterplatte 11 übertragbar sind. An einem zweiten Ende ist die flexible Leiterplatte 11 mit einem elektrischen Bauteil 7, insbesondere mit einer Leuchtdiode, bestückt. Diese wiederum steht ebenfalls durch die Bestückung in elektrischer Verbindung mit den Leiterbahnen der Leiterplatte 11. Durch die Anordnung der Leiterplatte 11 in dem Griffstück 1 ist es somit möglich von der ersten zur zweiten Anschlussvorrichtung, insbesondere von dem einen die elektrischen Kontakte 8, 9 aufweisenden Ende der Leiterplatte 11 zu dem zweiten Ende, aufweisend die zumindest eine Leuchtdiode 7, elektrische Energie zu übertragen.

In Figur 1C ist ein medizinisches, insbesondere dentales, Winkelstück 28 mit einem Griffstück 1 gemäß Figur 1A gezeigt. Das Gehäuse 2 des Winkelstücks 28 ist hierbei zweiteilig ausgebildet. An dem Griffstück 1, insbesondere an dessen zweiter Anschlussvorrichtung 6, ist ein Anschlussstück 35 mit einer dritten Anschlussvorrichtung 12 zur, insbesondere lösbaren, Verbindung mit einem nicht abgebildeten Versorgungsschlauch zum Verbinden des Winkelstücks 28 mit einer Medienquelle und/ oder Antriebseinheit, fest oder lösbar verbunden. Die dritte Anschlussvorrichtung 12 ist bevorzugt gewinkelt zur ersten und zweiten Anschlussvorrichtung 5, 6 angeordnet. Die elektrische Verbindungsvorrichtung 10 mit den elektrischen Kontakten 8, 9 sowie dem zumindest einen elektrischen Bauteil 7, insbesondere der Leuchtiode, erstreckt sich hierbei gewinkelt zur Längsachse des Griffstücks 1 zwischen dem Gehäuse 2 und der Antriebsvorrichtung 3 von der ersten zur zweiten Anschlussvorrichtung. Die elektrischen Kontakte 8, 9 im Bereich der zweiten Anschlussvorrichtung 6, welche auf der Verbindungsvorrichtung 10 angeordnet sind, sind bevorzugt mit weiteren elektrischen Kontakten, insbesondere eines Generators, oder elektrischer Leitungen, insbesondere mit elektrischen Kabel, welche bevorzugt in dem Anschlussstück 35 angeordnet sind, verbunden. Diese erstrecken sich vorzugsweise bis zu der dritten Anschlussvorrichtung 12. Alternativ ist es möglich, dass sich die Verbindungsvorrichtung 10 von der ersten Anschlussvorrichtung 10 bis zu der dritten Anschlussvorrichtung 12 erstreckt.

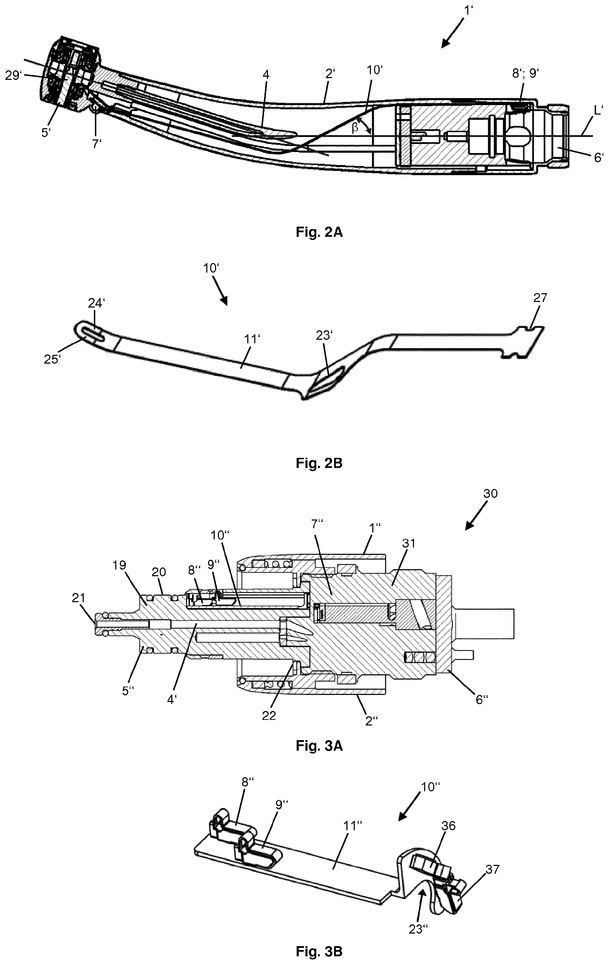

Die Figur 2A zeigt ein zweites Ausführungsbeispiel des Griffstücks 1' für ein luftbetriebenes medizinisches, insbesondere dentales, Winkelstück vorzugsweise einer dentalen Turbine. In dem Gehäuse 2` des Griffstücks 1' ist eine Versorgungsleitung 4 zum Antrieb der Werkzeugaufnahme 29` mittels eines mit der Aufnahme 29` verbunden Turbinenrotors angeordnet. Zum, insbesondere lösbaren, Verbinden des Griffstücks 1' mit einer Medienquelle, insbesondere einem Versorgungsschlauch, weist die zweite Anschlussvorrichtung 6' eine Kupplungsausnehmung auf. Von dieser erstreckt sich ein zweites Ausführungsbeispiel der elektrischen Verbindungsvorrichtung 10` in Richtung der ersten Anschlussvorrichtung 5', insbesondere in Richtung der Werkzeugaufnahme 29`, um die elektrischen Kontakte 8', 9' mit dem elektrischen Bauteil 7', welches bevorzugt eine Leuchtdiode umfasst, elektrisch miteinander zu verbinden. Die erste und zweite Anschlussvorrichtung 5', 6' sind auch bei diesem Ausführungsbeispiel gewinkelt zueinander angeordnet. Die elektrische Verbindungsvorrichtung 10` weist des Weiteren mehrere Abschnitte auf, welche in unterschiedlichen Winkeln β, vorzugsweise zwischen 0 und 90 Grad, zur Längsachse L' in dem Griffstück 1' zwischen der Versorgungsleitung 4 und dem Gehäuse 2' angeordnet sind, um die Verbindungsvorrichtung 10' platzsparend in dem Gehäuse 2' anzuordnen.

In Figur 2B ist die elektrische Verbindungsvorrichtung 10' aus Figur 2A gemäß dem zweiten Ausführungsbeispiel des Griffstücks 1' gezeigt. Die flexible Leiterplatte 11' der Verbindungsvorrichtung 10' weist hierbei mehrere im Wesentlichen streifenförmig ausgebildet Abschnitte sowie zumindest zwei ringförmige Abschnitte auf. Zumindest einer der ringförmigen Abschnitte umgibt eine Ausnehmung 23', durch welche sich die Versorgungsleitung 4, wie in Figur 2A gezeigt, erstreckt. Der jeweils andere ringförmige Abschnitt der elektrischen Verbindungsvorrichtung 10' weist bevorzugt zumindest zwei voneinander elektrisch isolierte Abschnitte 24', 25' auf, wobei auf jedem der beiden Abschnitte 24', 25' je ein elektrischer Kontakt 8', 9', wie in Figur 2A gezeigt, angeordnet ist. Durch die beabstandete, insbesondere isolierte Anordnung, beider Kontakte 8', 9' auf der Leiterplatte 11' wird ein möglicher elektrischer Kontakt, insbesondere ein elektrischer Kurzschluss, zwischen beiden Kontakten 8', 9' vermieden.

Die elektrische Verbindungsvorrichtung 10` selbst ist vorzugsweise lösbar mit dem Griffstück 1' verbunden. Hierzu weist die Verbindungsvorrichtung 10` Haltemittel 27 zur lösbaren Verbindung mit dem Griffstück 1' auf. Die Haltemittel 27 sind bevorzugt durch Nuten an der Leiterplatte 11' und Vorsprünge an dem Gehäuse 2` des Griffstücks 1' ausgebildet. Hierdurch ist es möglich die elektrische Verbindungsvorrichtung 10' durch eine mechanische Verbindung, z.B. eine Klemmverbindung, mit dem Gehäuse 2` des Griffstücks 1' zu verbinden. Alternativ ist es auch denkbar die Verbindung beider Bauteile durch eine Schraubverbindung, vorzugsweise mittels zumindest einer weiteren Ausnehmung in der Leiterplatte 11', einer Aufnahme mit einem Gewinde an dem Gehäuse 2` sowie einer Schraube, auszubilden.

In Figur 3A ist eine medizinische, insbesondere dentale, Kupplungsvorrichtung 30 mit einem dritten Ausführungsbeispiel des Griffstücks 1" abgebildet. Die Kupplungsvorrichtung 30 dient zum Verbinden eines medizinischen Instruments, insbesondere eines medizinischen Hand- oder Winkelstücks, mit einer Medienquelle und/ oder einer dentalen Einheit. Hierzu weist die Kupplungsvorrichtung 30 eine erste Anschlussvorrichtung 5" sowie eine zweite Anschlussvorrichtung 6" auf. In dem Gehäuse 2" der Kupplungsvorrichtung 30 ist zumindest eine Versorgungsleitung 4' zur Versorgung des Instruments mit Medien, wie zum Beispiel einem Antriebsmedium oder Kühlmedium, aufgenommen. Des Weiteren weist die Kupplungsvorrichtung 30 eine elektrische Verbindungsvorrichtung 10" mit zumindest einem elektrischen Bauteil 7" sowie zumindest einem elektrischen Kontakt 8", 9" auf, wobei die Verbindungsvorrichtung 10" beide Bauteile 7"; 8', 9' elektrisch miteinander verbindet. Die elektrische Verbindungsvorrichtung 10" ist in diesem Ausführungsbeispiel ebenfalls im Inneren des Griffstücks 1" angeordnet und als flexible Leiterplatte 11" ausgebildet.

Das elektrische Bauteil 7" umfasst bevorzugt einen Generator 31 zur Wandlung mechanischer in elektrischer Energie, welche mittels der elektrischen Verbindungsvorrichtung 10" von der Kupplungsvorrichtung 30, insbesondere über die erste Anschlussvorrichtung 5", auf das mit der Kupplungsvorrichtung 30 verbundene medizinische Instrument übertragbar ist. Hierzu ist die erste Anschlussvorrichtung 5" bevorzugt als Kupplungsvorsprung 19 mit einer Mantelfläche 20, einer Stirnfläche 21 sowie einer Kupplungsbasis 22 ausgebildet, wobei sich der zur Aufnahme der elektrischen Kontakte 8", 9" ausgebildete Abschnitt der elektrischen Verbindungsvorrichtung 10" von dem Griffstück 1" bis in den Kupplungsvorsprung 19 erstreckt. Die zumindest eine mit elektrisch leitenden Leiterbahnen beschichtete Seite der elektrischen Verbindungsvorrichtung 10" ist hierbei vorzugsweise der Mantelfläche 20 des Kupplungsvorsprungs 19 zugewandt, so dass die Energieübertragung zwischen der Kupplungsvorrichtung 30 und dem medizinischen Instrument über die Mantelfläche 20 des Kupplungsvorsprungs 19 erfolgen kann. Alternativ ist es denkbar, dass die elektrische Verbindungsvorrichtung vor oder hinter der Kupplungsbasis 22 angeordnet ist und die mit elektrisch leitenden Leiterbahnen beschichtete Seite der elektrischen Verbindungsvorrichtung 10" der vorzugsweise ringförmigen Kupplungsbasis 22 zugewandt ist. Des Weiteren kann die elektrische Verbindungsvorrichtung 10" der Stirnfläche 21 des Kupplungsvorsprungs 19 zugewandt sein.

Figur 3B zeigt die elektrische Verbindungsvorrichtung 10" aus Figur 3A. Diese weist zur Energieübertragung von dem Generator 31 auf das medizinische Instrument vorzugsweise zwei, bevorzugt federnd gelagerte, elektrische Kontakte 8", 9" sowie zwei weitere elektrische Kontakte 36, 37 zum, insbesondere lösbaren, Anschließen des Generators 31 an die elektrische Verbindungsvorrichtung 10" auf. Die elektrische Verbindungsvorrichtung 10" selbst ist durch eine flexible Leiterplatte 11" gebildet. Diese ist bevorzugt durch zumindest einen streifenförmigen sowie zumindest einen ringsegmentförmigen Abschnitt ausgebildet, welcher bevorzugt gewinkelt, vorzugsweise mit einem Winkel von 90 Grad, zum streifenförmigen Abschnitt der Leiterplatte 11" in dem Griffstück 1" angeordnet ist, um eine Ausnehmung 23" zu bilden, durch welche sich die zumindest eine Versorgungsleitung 4' der Kupplungsvorrichtung 30 erstreckt.

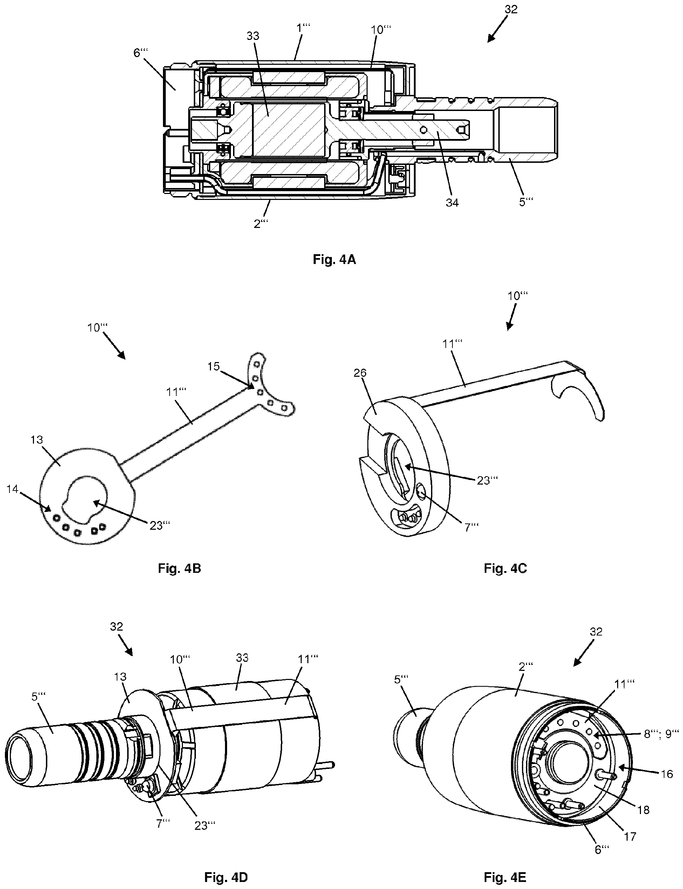

Figur 4A zeigt eine medizinische, insbesondere dentale, Antriebseinheit 32 mit einem vierten Ausführungsbeispiel des Griffstücks 1‴. In dem Gehäuse 2‴ des Griffstück 1‴ ist ein Elektromotor 33 zum Antrieb eines mit der Antriebseinheit 32 verbindbaren medizinischen, insbesondere dentalen, Hand- oder Winkelstücks angeordnet. Die Antriebseinheit 32 weist neben dem Elektromotor 33 eine Antriebswelle 34 auf, um eine Antriebsbewegung von dem Motor 33 auf das mit dem Griffstück 1‴ verbindbare Hand- oder Winkelstück zu übertragen. Zum, insbesondere lösbaren, Anschließen des Hand- oder Winkelstücks an die Antriebseinheit 32 weist diese eine erste Anschlussvorrichtung 5‴ auf. Eine zweite Anschlussvorrichtung 6‴ dient zum, insbesondere lösbaren, Verbinden des Griffstücks 1‴ mit einer Medienquelle und/ oder einer dentalen Einheit. Zur Übertragung von Daten und/ oder Energie zwischen beiden Anschlussvorrichtungen 5‴, 6‴, erstreckt sich von der ersten Anschlussvorrichtung 5‴ eine elektrische Verbindungsvorrichtung 10‴ zur zweiten Anschlussvorrichtung 6‴. Hierzu sind Abschnitte der elektrischen Verbindungsvorrichtung 10‴ bevorzugt in unterschiedlichen Winkeln, vorzugsweise zwischen 0 und 90 Grad, in dem Griffstück 1‴, insbesondere zwischen dem Elektromotor 33 und dem Gehäuse 2‴ der Antriebseinheit 33 angeordnet.

In Figur 4B ist die elektrische Verbindungsvorrichtung 10‴ aus Figur 4A abgebildet. Diese umfasst neben der flexiblen Leiterplatte 11‴ eine starre Leiterplatte 13, wobei die flexible Leiterplatte 11‴ ein flexibles Trägermaterial, vorzugsweise eine Trägerfolie, und die starre Leiterplatte 13 insbesondere ein starres Trägermaterial aufweist. Beide Leiterplatten 11‴, 13 weisen Anschlüsse 14, 15 zur Befestigung und Kontaktierung der elektrischen Bauteile, insbesondere des zumindest einen elektrischen Bauteils 7‴ und des zumindest einen elektrischen Kontakts 8‴, 9‴ auf. Die Anschlüsse 14, 15 selbst sind bevorzugt durch Lötflächen ausgebildet, welche in elektrischer Verbindung mit den Leiterbahnen der Verbindungsvorrichtung 10‴ stehen. Zur platzsparenden Anordnung der Verbindungsvorrichtung 10‴ in dem Griffstück 1‴ weist diese eine Ausnehmung 23‴ auf, durch welche sich die insbesondere die Antriebswelle 34 der Antriebseinheit 32 erstreckt.

Figur 4C zeigt die elektrische Verbindungsvorrichtung 10‴ aus Figur 4B, wobei die Verbindungsvorrichtung 10‴ zumindest teilweise in einem Hüllmaterial 26 eingebettet ist. Insbesondere sind die starre Leiterplatte 13 und das die elektrische Leuchtdiode umfassende Bauteil 7‴ in dem Gehäuse 1‴ zumindest teilweise von dem Hüllmaterial 26, welches bevorzugt aus einem Vergussmassekörper besteht, umgeben. Zusätzlich zur starren Leiterplatte 13 weist ebenso der Vergussmassekörper 26 eine Ausnehmung 23‴ auf. Von dem starren Körper 26, welcher bevorzugt im Bereich der ersten Anschlussvorrichtung 5‴ angeordnet ist, erstreckt sich die flexible Leiterplatte 11‴ der elektrischen Verbindungsvorrichtung 10‴ zur zweiten Anschlussvorrichtung 6‴ des Griffstücks 1‴.

Das Hüllmaterial 26, welches bevorzugt aus einem Kunststoff besteht, ist vorzugsweise mittels eines Spritzguss- oder Spritzpressverfahren aufgebracht. Alternativ kann das Hüllmaterial durch Gießen mit oder ohne Vakuum gebildet werden.

Figur 4D zeigt die medizinische Antriebseinheit 32 aus Figur 4A ohne dem Gehäuse 2‴ und aus Sicht der ersten Anschlussvorrichtung 5‴, welche durch einen Kupplungsvorsprung gebildet ist. Die starre Leiterplatte 13 der elektrischen Verbindungsvorrichtung 10‴ ist in diesem Ausführungsbeispiel vor der Kupplungsbasis des Kupplungsvorsprungs angeordnet und erstreckt sich vorzugsweise in radialer Richtung zur Längsachse der Antriebseinheit 32, insbesondere in radialer Richtung von dem Kupplungsvorsprung, welcher insbesondere in Form eines Zapfens ausgebildet ist. Hierzu weist die Leiterplatte 13 eine Ausnehmung 23‴ auf. Die zumindest eine mit elektrisch leitenden Leiterbahnen beschichtete Seite der starren Leiterplatte 13 ist bevorzugt in Richtung der Stirnfläche des Kupplungsvorsprungs angeordnet, so dass das zumindest eine elektrische Bauteil 7‴, insbesondere die Leuchtdiode, in Richtung der Stirnfläche zeigt.

Die flexible Leiterplatte 11‴ der elektrischen Verbindungsvorrichtung 10‴ erstreckt sich in axialer Richtung entlang dem Elektromotor 33 von der starren Leiterplatte 13, insbesondere von ersten Anschlussvorrichtung 5‴, gebildet durch den Kupplungsvorsprung, zu der zweiten Anschlussvorrichtung. Hierzu ist die flexible Leiterplatte 11‴ vorzugsweise in etwa 90 Grad zur starren Leiterplatte 13 angeordnet. Im Bereich der zweiten Anschlussvorrichtung weist die flexible Leiterplatte 11‴ der elektrischen Verbindungsvorrichtung 10‴ vorzugsweise einen weiteren Abschnitt auf, welcher wiederum zum ersten Abschnitt der flexiblen Leiterplatte 11‴ gewinkelt angeordnet ist. Dieser dient zur Aufnahme des zumindest einen elektrischen Kontakts im Bereich der zweiten Anschlussvorrichtung.

Figur 4E zeigt ebenfalls die medizinische Antriebseinheit 32 mit der ersten und zweiten Anschlussvorrichtung 5‴, 6‴ aus Figur 4A jedoch mit dem Gehäuse 2‴ und aus Sicht der zweiten Anschlussvorrichtung 6‴. Die zweite Anschlussvorrichtung 6‴ ist hierbei als Kupplungsausnehmung 16 mit einer die Ausnehmung umgebenden Mantelfläche 17 und einer Stirnfläche 18 ausgebildet. Die Kupplungsausnehmung 16 dient zur Aufnahme einer weiteren Anschlussvorrichtung, insbesondere eines Versorgungsschlauchs, zur Verbindung der Antriebseinheit 32 mit einer Medienquelle und/ oder einer dentalen Einheit. Hierzu ist der zur Aufnahme des zumindest einen elektrischen Kontakts 8‴, 9‴ ausgebildete Abschnitt der elektrischen Verbindungsvorrichtung 10‴, insbesondere die flexible Leiterplatte 11‴, bevorzugt im Bereich der zweiten Anschlussvorrichtung 6‴ in dem Gehäuse 2‴ des Griffstücks 1‴ hinter der Stirnfläche 18 der Ausnehmung 16 angeordnet. Die Stirnfläche 18 wird vorzugsweise durch eine nicht abgebildete Abdeckung, insbesondere einer Deckscheibe, gebildet. Die zumindest eine mit elektrisch leitenden Leiterbahnen beschichtete Seite der flexiblen Leiterplatte 11‴ ist bevorzugt der Stirnfläche 18, insbesondere der Abdeckung, der Kupplungsausnehmung 16 zugewandt, so dass der zumindest eine auf der flexiblen Leiterplatte 11‴ angeordnete elektrische Kontakt 8‴, 9‴ sich im Wesentlichen parallel zur Ausnehmung 16 erstreckt.

Im Rahmen der Erfindung versteht es sich selbstverständlich, dass das erfindungsgemäße medizinische, insbesondere dentale, Griffstück nicht auf die oben beschriebenen Ausführungsbeispiele und auf die Verwendung bei einem medizinischen, insbesondere dentalen, Hand- oder Winkelstück, einer Kupplungsvorrichtung oder einer Antriebseinheit beschränkt ist. Die elektrische Verbindungsvorrichtung des Griffstücks kann insbesondere dazu ausgebildet sein neben dem zumindest einen elektrischen Kontakt und dem zumindest einen elektrischen Bauteil weitere elektrische Bauteile, wie z.B. weitere Leuchtdioden, Sensoren, elektronische Speicher oder elektrische Schalter, aufzunehmen. Insbesondere kann der zumindest eine elektrische Kontakt, welcher mittels der elektrischen Verbindungsvorrichtung, insbesondere mittels der flexiblen Leiterplatte, mit dem zumindest einen elektrischen Bauteil in elektrischer Verbindung steht, Bestandteil eines weiteren elektrischen Bauteils sein. Des Weiteren kann der zumindest eine elektrische Kontakt und das zumindest eine elektrische Bauteil im Bereich der ersten und/ oder zweiten Anschlussvorrichtung angeordnet sein oder im Inneren des Griffstücks, insbesondere entfernt von der ersten und/ oder zweiten Anschlussvorrichtung.

## Patentansprüche

1. Medizinisches, insbesondere dentales, Griffstück (1, 1', 1", 1‴) zum Antrieb eines medizinischen Instruments, aufweisend, ein Gehäuse (2, 2', 2", 2‴) mit einer darin aufgenommenen Antriebsvorrichtung (3) und/ oder Versorgungsleitung (4, 4') für eine Antriebsvorrichtung (3), eine erste Anschlussvorrichtung (5, 5', 5", 5‴) zum Anschließen eines medizinischen, insbesondere dentalen, Instruments sowie eine zweite Anschlussvorrichtung (6, 6', 6", 6‴) zum Verbinden des Griffstücks (1, 1', 1", 1‴) mit einer Medienquelle und/ oder einer Antriebseinheit, zumindest ein elektrisches Bauteil (7, 7', 7", 7‴), zumindest einen elektrischen Kontakt (8, 8', 8", 8‴; 9, 9', 9", 9‴) und eine elektrische Verbindungsvorrichtung (10, 10', 10", 10‴) die das zumindest eine elektrische Bauteil (7, 7', 7", 7‴) und den zumindest einen elektrischen Kontakt (8, 8', 8", 8‴; 9, 9', 9", 9‴) zur Übertragung von Daten und/ oder Energie elektrisch miteinander verbindet, wobei die elektrische Verbindungsvorrichtung (10, 10', 10", 10‴) eine im Inneren des Griffstücks (1, 1', 1", 1‴) angeordnete flexible Leiterplatte (11, 11', 11", 11‴) umfasst, die sich durch das medizinische, insbesondere dentale, Griffstück (1, 1', 1", 1‴) zwischen dem zumindest einen elektrischen Kontakt (8, 8', 8", 8‴; 9, 9', 9", 9‴) und dem zumindest einen elektrischen Bauteil (7, 7', 7", 7‴) mit einem streifenförmigen Abschnitt und einem gewinkelt zu dem streifenförmigen Abschnitt angeordneten zweiten Abschnitt erstreckt, **dadurch gekennzeichnet, dass** der zweite Abschnitt eine Ausnehmung (23, 23', 23", 23‴) aufweist, durch welche sich die Antriebsvorrichtung (3), die Versorgungsleitung (4, 4') und/ oder zumindest eine der Anschlussvorrichtungen (5, 5', 5", 5‴; 6, 6', 6", 6‴) erstreckt/ erstrecken, wobei der zweite Abschnitt mit der Ausnehmung (23, 23', 23", 23‴) von dem zumindest einen elektrischen Bauteil (7, 7', 7", 7‴) beabstandet und durch den streifenförmigen Abschnitt mit dem zumindest einen elektrischen Bauteil (7, 7', 7", 7‴) verbunden ist.

2. Medizinisches, insbesondere dentales, Griffstück (1‴) nach Anspruch 1, **dadurch gekennzeichnet, dass** die elektrische Verbindungsvorrichtung (10‴) des Weiteren eine starre Leiterplatte (13) umfasst, wobei die flexible Leiterplatte (11‴) ein flexibles Trägermaterial und die starre Leiterplatte (13) ein starres Trägermaterial aufweist.

3. Medizinisches, insbesondere dentales, Griffstück (1‴) nach Anspruch 1 oder 2, **dadurch gekennzeichnet, dass** die flexible und/ oder starre Leiterplatte (11‴; 13) Anschlüsse (14, 15) zur Befestigung des zumindest einen elektrischen Bauteils (7‴) und/ oder des zumindest einen elektrischen Kontakts (8‴; 9‴) aufweist/ aufweisen.

4. Medizinisches, insbesondere dentales, Griffstück (1, 1', 1", 1‴) nach einem der Ansprüche 2 oder 3, **dadurch gekennzeichnet, dass** die starre Leiterplatte (13) gewinkelt zur flexiblen Leiterplatte (11, 11', 11", 11‴) angeordnet ist.

5. Medizinisches, insbesondere dentales, Griffstück (1‴) nach einem der vorherigen Ansprüche, **dadurch gekennzeichnet, dass** die flexible Leiterplatte (11, 11', 11", 11‴) einen dritten Abschnitt aufweist, der gewinkelt zu dem zweiten Abschnitt mit der Ausnehmung (23, 23', 23", 23‴) angeordnet ist.

6. Medizinisches, insbesondere dentales, Griffstück (1") nach einem der vorherigen Ansprüche, **dadurch gekennzeichnet, dass** die Ausnehmung (23, 23', 23", 23‴) des zweiten Abschnitts ringförmig oder ringsegmentförmig ausgebildet ist.

7. Medizinisches, insbesondere dentales, Griffstück (1, 1', 1", 1‴) nach einem der vorherigen Ansprüche, **dadurch gekennzeichnet, dass** das zumindest eine elektrische Bauteil (7, 7', 7", 7‴) eine Leuchtdiode umfasst.

8. Medizinisches, insbesondere dentales, Griffstück (1, 1') nach einem der vorherigen Ansprüche, **dadurch gekennzeichnet, dass** die flexible und/ oder starre Leiterplatte (11, 11') zwei voneinander elektrisch isolierte Abschnitte (24, 25; 24', 25') aufweist/ aufweisen, wobei auf jedem der beiden Abschnitte (24, 25; 24', 25') je ein elektrischer Kontakt (8, 9; 8', 9`) vorgesehen ist.

9. Medizinisches, insbesondere dentales, Griffstück (1‴) nach einem der vorherigen Ansprüche, **dadurch gekennzeichnet, dass** die elektrische Verbindungsvorrichtung (10‴) und das elektrische Bauteil (7‴) in dem Gehäuse (1‴) zumindest teilweise in einem Hüllmaterial (26) eingebettet sind.

10. Medizinisches, insbesondere dentales, Griffstück (1, 1', 1", 1‴) nach einem der vorherigen Ansprüche, **dadurch gekennzeichnet, dass** sich eine Wellenanordnung der Antriebsvorrichtung (3) oder eine Versorgungsleitung (4) zum Antrieb einer Werkzeugaufnahme (29, 29') mittels eines mit der Werkzeugaufnahme (29, 29') verbunden Turbinenrotors durch die Ausnehmung (23, 23', 23", 23‴) des zweiten Abschnitts erstreckt.

11. Medizinisches, insbesondere dentales, Griffstück (1') nach Anspruch 5, **dadurch gekennzeichnet, dass** der zweite Abschnitt mit der Ausnehmung (23, 23', 23", 23‴) den ersten Abschnitt mit dem dritten Abschnitt verbindet.

12. Medizinisches, insbesondere dentales, Hand- oder Winkelstück (28), **gekennzeichnet durch** ein Griffstück (1) nach einem der Ansprüche 1 bis 11, wobei die erste Anschlussvorrichtung (5) durch eine in dem Griffstück (1) bevorzugt drehbar gelagerte Werkzeugaufnahme (29) für ein Behandlungswerkzeug ausgebildet ist.

13. Medizinische, insbesondere dentale, Kupplungsvorrichtung (30), **gekennzeichnet durch** ein Griffstück (1") nach einem der Ansprüche 1 bis 11.

14. Medizinische, insbesondere dentale, Kupplungsvorrichtung (30) nach Anspruch 13, **dadurch gekennzeichnet, dass** das elektrische Bauteil (7") einen Generator (31) zur Wandlung mechanischer in elektrische Energie umfasst.

15. Medizinische, insbesondere dentale, Antriebseinheit (32), **gekennzeichnet durch** ein Griffstück (1‴) nach einem der Ansprüche 1 bis 11, wobei die in dem Griffstück (1‴) angeordnete Antriebsvorrichtung (3) einen Elektromotor (33) oder Luftmotor zum Antrieb eines mit der Antriebseinheit verbundenen medizinischen, insbesondere dentalen, Hand- oder Winkelstücks umfasst.

## Claims

1. A medical, in particular dental, handle (1, 1', 1", 1‴) for driving a medical instrument, comprising a housing (2, 2', 2", 2‴) with a drive device (3) accommodated therein and/or a supply line (4, 4') for a drive device (3), a first connection device (5, 5', 5", 5"') for connection of a medical, in particular dental, instrument and a second connection device (6, 6', 6", 6‴) for connecting the handle (1, 1', 1", 1‴) to a media source and/or a drive unit, at least one electric component (7, 7', 7", 7‴), at least one electric contact (8, 8', 8", 8‴; 9, 9', 9", 9‴) and one electric connecting device (10, 10', 10", 10‴) which electrically connects the at least one electric component (7, 7', 7", 7‴) and the at least one electric contact (8, 8', 8", 8‴; 9, 9', 9", 9‴) for the transmission of data and/ or energy, wherein the electrical connection device (10, 10', 10", 10‴) comprises a flexible printed circuit board (11, 11', 11", 11‴) arranged inside the handle (1, 1', 1", 1‴), which extends through the medical, in particular dental, handle (1, 1', 1", 1‴) between the at least one electrical contact (8, 8', 8", 8‴; 9, 9', 9", 9‴) and the at least one electrical component (7, 7', 7", 7‴) with a strip-shaped section and a second section arranged at an angle to the strip-shaped section, **characterized in that**
the second section has a recess (23, 23', 23", 23‴) through which the drive device (3), the supply line (4, 4') and/or at least one of the connection devices (5, 5', 5", 5‴; 6, 6', 6", 6‴) extend(s), wherein the second section with the recess (23, 23', 23", 23‴) is spaced from the at least one electrical component (7, 7', 7", 7‴) and is connected by the strip-shaped section to the at least one electrical component (7, 7', 7", 7‴).

2. The medical, in particular dental, handle (1‴) according to Claim 1, **characterized in that**
the electric connecting device (10‴) additionally comprises a rigid circuit board (13), such that the flexible circuit board (11‴) has a flexible carrier material and the rigid circuit board (13) as a rigid carrier material.

3. The medical, in particular dental, handle (1‴) according to Claim 1 or 2, **characterized in that**
the flexible and/or rigid circuit board (11‴; 13) comprise(s) terminals (14, 15) for attaching the at least one electric component (7‴) and/or the at least one electric contact (8‴; 9‴).

4. The medical, in particular dental, handle (1, 1', 1", 1‴) according to any one of the Claims 2 or 3, **characterized in that**
the rigid circuit board (13) is arranged at an angle to the flexible circuit board (11, 11', 11", 11‴).

5. The medical, in particular dental, handle (1‴) according to any one of the preceding claims, **characterized in that**
the flexible circuit board (11, 11', 11", 11‴) comprises a third section which is arranged at an angle to the second section having the recess (23, 23', 23", 23‴).

6. The medical, in particular dental, handle (1") according to any one of the preceding claims, **characterized in that**
the recess (23, 23', 23", 23‴) of the second section is annular or ring-segment shaped.

7. The medical, in particular dental, handle (1, 1', 1", 1‴) according to any one of the preceding claims, **characterized in that**
the at least one electrical component (7, 7', 7", 7‴) comprises a light diode.

8. The medical, in particular dental, handle (1, 1') according to any one of the preceding claims, **characterized in that**
the flexible and/or rigid circuit board (11, 11') has/have two sections (24, 25; 24', 25') which are insulated electrically from one another, such that an electric contact (8, 9; 8', 9') is provided on each of the two sections (24, 25; 24', 25').

9. The medical, in particular dental, handle (1‴) according to any one of the preceding claims, **characterized in that**
the electric connecting device (10‴) and the electric component (7‴) in the housing (1‴) are embedded at least partially in a sheathing material (26).

10. The medical, in particular dental, handle (1, 1', 1", 1‴) according to any one of the preceding claims, **characterized in that**
wherein a shaft arrangement of the drive device (3) or a supply line (4) for driving a tool holder (29, 29') by a turbine rotor connected to the tool holder (29, 29') extends through the recess (23, 23', 23", 23‴) of the second section.

11. The medical, in particular dental, handle (1') according to Claim 5, **characterized in that**
the second section having the recess (23, 23', 23", 23"') connects the first section with the third section.

12. A medical, in particular dental, handpiece or contra-angle handpiece (28), **characterized by**
a handle (1) according to any one of Claims 1 to 11, wherein the first connection device (5) is formed by a tool receptacle (29) for a treatment tool which is preferably rotatably mounted in the handle (1).

13. A medical, in particular dental, coupling device (30), **characterized by**
a handle (1") according to any one of Claims 1 to 11.

14. The medical, in particular dental, coupling device (30) according to Claim 13, **characterized in that**
the electric component (7") comprises a generator (31) for converting mechanical energy into electric energy.

15. A medical, in particular dental, drive unit (32), **characterized by**
a handle (1‴) according to any one of Claims 1 to 11, wherein the drive device (3) arranged in the handle (1‴) has an electric motor (33) or an air motor for driving a medical, in particular dental, handpiece or contra-angle handpiece which is connected to the drive unit.

## Revendications

1. Poignée médicale (1, 1', 1", 1‴) médicale, notamment dentaire, destinée à entraîner un instrument médical, comportant un corps (2, 2', 2", 2‴), pourvu d'un dispositif d'entraînement (3) réceptionné en son intérieur et / ou d'une conduite d'alimentation (4, 4') pour le dispositif d'entraînement (3), un premier dispositif de raccordement (5, 5', 5", 5‴), destiné à raccorder un instrument médical, notamment dentaire, ainsi qu'un deuxième dispositif de raccordement (6, 6', 6", 6‴), destiné à relier la poignée médicale (1, 1', 1", 1‴) avec une source de fluide et / ou une **unité d'entraînement**, au moins un composant **(7, 7', 7", 7‴)** électrique, au moins un contact **(8, 8', 8", 8‴; 9, 9', 9", 9‴)** électrique et un dispositif de liaison (10, 1**0', 10", 10‴)** électrique, qui relie électriquement l'un à l'autre l'au moins un composant **(7, 7', 7", 7‴)** électrique et l'au moins un contact **(8, 8', 8", 8‴; 9, 9', 9", 9‴)** électrique, pour la transmission de données et / ou d'énergie, le dispositif de liaison **(10, 10', 10", 10‴)** électrique comprenant une carte de circuit imprimé **(11, 11', 11", 11‴)** souple, placée à l'intérieur de la poignée médicale **(1, 1', 1", 1‴)**, qui s'étend par une partie en forme de bande et par une deuxième partie placée de manière coudée par rapport à la partie en forme de bande à travers la poignée médicale **(1**, 1', 1", 1‴) médicale, notamment dentaire, entre l'au moins un contact **(8, 8', 8", 8‴**; 9, **9', 9", 9‴)** électrique et l'au moins un composant (7, **7', 7", 7‴)** électrique, **caractérisée en ce que**
la deuxième partie comporte un évidement **(23, 23', 23", 23‴)** à travers lequel s'étend / s'étendent le **dispositif d'entraînement** (3), la conduite d'alimentation (4, **4')** et / ou au moins l'un des dispositifs de raccordement (**5, 5', 5", 5‴; 6, 6', 6", 6‴),** la deuxième partie pourvue de l'évidement **(23, 23', 23", 23‴)** étant reliée avec un écart par rapport à l'au moins un composant **(7, 7', 7", 7‴)** électrique et par la partie en forme de bande avec l'au moins un composant (7, **7', 7", 7‴)** électrique.

2. Poignée médicale **(1 "') médicale, notamment dentaire** selon la revendication 1, **caractérisée en ce que** le dispositif de liaison **(10‴)** électrique comprend par ailleurs une carte de circuit imprimé (13) rigide, la carte de circuit imprimé **(11‴)** souple comportant une matière de support souple et la carte de circuit imprimé (13) rigide comportant une matière de support rigide.

3. Poignée médicale **(1‴) médicale, notamment dentaire** selon la revendication 1 ou 2, **caractérisée en ce que** la carte de circuit imprimé **(11‴**; 13) souple et / ou rigide comporte / comportent des raccordements (14, 15), pour la fixation de l'au moins un composant **(7‴)** électrique et / ou de l'au moins un contact **(8‴; 9‴)** électrique.

4. Poignée médicale **(1, 1', 1", 1‴)** médicale, notamment dentaire selon l'une quelconque des revendications 2 ou 3, **caractérisée en ce que** la carte de circuit imprimé (13) rigide est placée de manière coudée par rapport à la carte de circuit imprimé (11, **11', 11", 11‴)** souple.

5. Poignée médicale **(1‴) médicale, notamment dentaire selon l'une quelconque** des revendications précédentes, **caractérisée en ce que** la carte de circuit imprimé **(11,** 11', 11", 11‴) souple comporte une troisième partie, qui est placée de manière coudée par rapport à la deuxième partie pourvue de l'évidement **(23, 23', 23", 23"').**

6. Poignée médicale **(1")** médicale, notamment dentaire **selon l'une quelconque** des revendications précédentes, **caractérisée en ce que** l'évidement **(23, 23', 23", 23‴)** de la deuxième partie est conçu de forme annulaire ou en forme de segment annulaire.

7. Poignée médicale **(1, 1', 1", 1‴)** médicale, notamment dentaire selon l'une quelconque des revendications précédentes, **caractérisée en ce que** l'au moins un composant **(7, 7', 7", 7‴)** électrique comprend une diode électroluminescente.

8. Poignée médicale (1, 1') médicale, notamment dentaire **selon l'une quelconque** des revendications précédentes, **caractérisée en ce que** la carte de circuit imprimé **(11, 11')** souple et / ou rigide comporte / comportent deux parties (24, 25; **24', 25')** électriquement isolées l'une de l'autre, sur chacune des deux parties (24, 25; **24', 25')** étant prévu chaque fois un contact (8, 9; **8', 9')** électrique.

9. Poignée médicale **(1‴) médicale, notamm**ent dentaire **selon l'une quelconque** des revendications précédentes, **caractérisée en ce que** le dispositif de liaison (10‴) électrique et le composant **(7‴)** électrique sont incorporés dans le corps (1‴), au moins en partie dans une **matière d'enrobage** (26).

10. Poignée médicale **(1, 1', 1", 1‴)** médicale, notamment dentaire selon l'une quelconque des revendications précédentes, **caractérisée en ce qu'**un ensemble d'arbres du dispositif d'entraînement (3) ou une conduite d'alimentation (4) pour entraîner un porte-outil (29, 29') au moyen d'un rotor de turbine relié au porte-outil (29, 29') s'étend à travers l'évidement (23, 23', 23", 23‴) de la deuxième section.

11. Poignée médicale **(1')** médicale, notamment dentaire selon la revendication 5, **caractérisée en ce que** la deuxième partie pourvue de l'évidement **(23, 23', 23", 23‴)** relie la première partie avec la deuxième partie.

12. Pièce à main ou contre-angle (28) médical, notamment dentaire, **caractérisée par** une poignée (1) **selon** l'une quelconque des revendications 1 à 11, le premier dispositif de raccordement (5) étant formé par un porte-outil (29) pour un outil de traitement, logé de préférence de manière rotative dans la poignée (1).

13. **Dispositif d'accouplement (30) médical, notamment** dentaire, **caractérisé par** une poignée **(1") selon l'une quelconque des revendications** 1 à 11.

14. **Dispositif d'accouplement (30) médical, notamment dentaire** selon la revendication 13, **caractérisé en ce que** le composant **(7")** électrique comprend un générateur (31) pour la conversion d'énergie mécanique en énergie électrique.

15. **Unité d'entraînement** (32) médicale, notamment dentaire, **caractérisée par** une poignée (1‴) **selon l'une quelconque des revendications** 1 à 11, le dispositif **d'entraînement** (3) placé dans la poignée (1‴) comprenant un moteur électrique (33) ou un moteur pneumatique, destiné à entraîner une pièce à main ou contre-angle médicale, notamment dentaire, reliée avec **l'unité d'entraînement.**
